**Europäisches Patentamt**

**European Patent Office**

**Office européen des brevets**

(11) Numéro de publication: **0 239 487 B1**

(12) **FASCICULE DE BREVET EUROPEEN**

(45) Date de publication de fascicule du brevet:
**18.12.91**

(51) Int. Cl.⁵: **G01N 30/74**, G01N 21/45

(21) Numéro de dépôt: **87400646.3**

(22) Date de dépôt: **24.03.87**

(54) **Détecteur réfractométrique pour chromatographie en phase liquide.**

(30) Priorité: **26.03.86 FR 8604342**

(43) Date de publication de la demande:
**30.09.87 Bulletin 87/40**

(45) Mention de la délivrance du brevet:
**18.12.91 Bulletin 91/51**

(84) Etats contractants désignés:
**AT BE CH DE ES GB IT LI NL**

(56) Documents cités:
**EP-A- 163 847**       **DE-A- 3 225 275**
**FR-A- 2 107 511**    **FR-A- 2 273 258**
**FR-A- 2 298 792**    **US-A- 3 539 262**
**US-A- 4 455 089**

(73) Titulaire: **Couillard, François**
**42, rue Henri Faisan**
**F-64000 Pau(FR)**

(72) Inventeur: **Couillard, François**
**42, rue Henri Faisan**
**F-64000 Pau(FR)**

(74) Mandataire: **Cuer, André et al**
**Cabinet Ballot-Schmit 7, rue Le Sueur**
**F-75116 Paris(FR)**

**Description**

La présente invention a pour objet des perfectionnements aux chromatographes en phase liquide à hautes performances, dits "HPLC" (high performance liquid chromatography).

A l'heure actuelle la plupart des détecteurs utilisés sont les photomètres et les réfractomètres, et plus rarement, pour des applications très spécifiques, des détecteurs électrochimiques, conductimétriques ou autres.

Les photomètres présentent les avantages d'une haute sensibilité et d'une grande stabilité. Ils sont utilisables dans tous les cas où les éluats à détecter absorbent la lumière dans la gamme des longueurs d'onde comprises entre 190 et 700 nm environ. Mais ces photomètres présentent des inconvénients majeurs : ils ne sont pas universels et dans une même analyse, on peut rencontrer non seulement des éluats qui absorbent la lumière à des longueurs d'onde différentes ou qui même ne l'absorbent pratiquement pas, ce qui notamment en chromatographie préparative peut présenter l'inconvénient de laisser passer inaperçues des impuretés.

Qui plus est, dans ce cas de chromatographie préparative, le photomètre est rapidement saturé vers une densité optique de l'ordre de 2.

En divisant par exemple par 10 la longueur du chemin optique dans la cuve, on diminue cet inconvénient, mais en perdant plus encore sur la sensibilité.

Quant aux refractomètres, ils présentent l'avantage essentiel d'être pratiquement universels. La plupart des appareils actuellement commercialisés sont à déviation de faisceaux lumineux par double cuve prismatique à circulation. Dans ces détecteurs, une source lumineuse projette un faisceau sur un double photodétecteur après avoir traversé successivement un diaphragme, d'éventuelles lentilles de concentration, une lame de verre tournante à faces parallèles pour ajuster le zéro optique de l'appareil, c'est-à-dire pour équilibrer l'intensité lumineuse éclairant les deux photodétecteurs, une double cuve prismatique l'une pour un liquide de référence, l'autre pour la phase à analyser.

Lorsque l'indice de réfraction de cette dernière varie, la section prismatique des deux cuves successives est telle que le faisceau dévie d'un photodétecteur vers l'autre, selon le signe de la différence des indices entre les deux cuves. Or dans certains cas, notamment en chromatographie préparative, où l'on peut rencontrer des concentrations élevées dans l'une des deux cuves, ou si l'on crée un gradient d'élution, les variations d'indices peuvent être telles que le faisceau peut dévier jusqu'à saturation de l'instrument, c'est-à-dire que le faisceau dévié n'éclaire plus qu'une seule des deux cellules. Ainsi le chromatogramme se trouve écrêté et plusieurs pics à base commune peuvent se trouver non distingués.

Comme pour les photomètres, on peut réduire les inconvénients en diminuant les déviations, mais ceci au prix, encore ici, d'une perte sur la sensibilité. On évite alors la saturation mais on ne distingue plus les petits pics, c'est-à-dire les impuretés, quand on est en chromatographie préparative.

Quels que soient les efforts déployés, on se heurte toujours aux problèmes que crée un gradient.

On a également proposé un système réfractométrique à source monochromatique dont le faisceau est divisé pour traverser deux cuves en parallèle, pour un liquide de référence et la phase à analyser, puis les deux faisceaux sont rassemblés pour éclairer un photodétecteur. Des interférences se produisent du fait de la variation du chemin optique, côté mesure en fonction de la variation de l'indice. On peut considérer que la sinusoïde suivie par l'intensité est linéaire au voisinage de la différence d'indice nulle; ce qui donne une sensibilité acceptable mais ne résoud pas les problèmes de saturation et d'utilisation de gradient, et comme dans les cas précédents, la saturation peut être évitée au détriment de la sensibilité.

Un détecteur réfractométrique correspondant au préambule de la revendication 1 est décrit dans US-A-4455089.

La présente invention a donc pour but d'éviter les inconvénients ci-dessus énumérés et notamment en rendant compatibles sensibilité et saturation, surtout pour la chromatographie préparative et en permettant d'utiliser un gradient d'élution aussi bien en chromatographie analytique qu'en préparative.

Pour ce faire, conformément à l'invention (voir la revendication 1), on fait appel à un réfractomètre différentiel interférentiel dont chacune des cuves (de référence et de mesure) participera indépendamment l'une de l'autre, à deux systèmes d'interféromètres indépendants, mais "alimentés" en lumière par la même source (laser par exemple).

La détection photométrique des deux interféromètres sera réalisée par deux photodétecteurs indépendants. On comprend que dans un tel système, chaque photodétecteur reçoit une intensité lumineuse qui est une fonction sinusoïdale de la différence des indices de réfraction entre les cuves de référence et de mesure.

En conséquence, si dans une des cuves l'indice de réfraction varie progressivement dans des proportions très grandes, par exemple en gradient, le photodétecteur correspondant reçoit une intensité lumineuse à variation sinusoïdale, ce qui signifie que l'on dispose d'une information de phase entre la mesure et la référence qui sera fonction, à $2 k\pi$

près, de la différence d'indice de réfraction entre les deux cuves.

Si cette différence devient très grande, rien ne change, et l'instrument, au stade de la détection, ne parvient jamais à saturation. On peut donc parler de dynamique de mesure infinie bien que l'indice de réfraction soit une grandeur finie.

Pour que cela soit significatif, on déterminera les deux produits ou mélanges de produits d'indices extrêmes que l'on peut envisager afin de définer la capacité de mémoire du système informatique de traitement qui devra simplement emmagasiner les déphasages à $2 k \pi$ près, en déterminant k, par exemple par la dérivée du signal détecté.

Le détecteur conforme à l'invention est entièrement informatisé et l'on peut utiliser le gradient d'élution. Comme la saturation n'est plus atteinte, le chromatogramme se dessine simplement et clairement sur une ligne de base évolutive. Celle-ci, comme dans un intégrateur, sera établie à zéro pour le calcul.

Les chromatogrammes mis en mémoire peuvent être présentés sur afficheur vidéographique, sur enregistreur analogique, sur imprimante graphique, ou tout autre système d'affichage graphique.

Un automatisme permet à l'appareil de choisir lui-même la meilleure sensibilité pour chaque pic et de l'inscrire en regard de chacun d'eux, afin que le chromatogramme reste dans les limites de l'afficheur.

Une loupe électronique peut agrandir jusqu'à la sensibilité maximale de l'instrument la ligne de base et le contour du chromatogramme, notamment pour détecter d'éventuelles impuretés, en particulier en chromatographie préparative.

On notera que le ou les axes de cuves inutilisés conformément aux présentes peuvent permettre d'autres mesures ou détections, en spectrophotométrie aux ultra-violets ou en fluométrie par exemple.

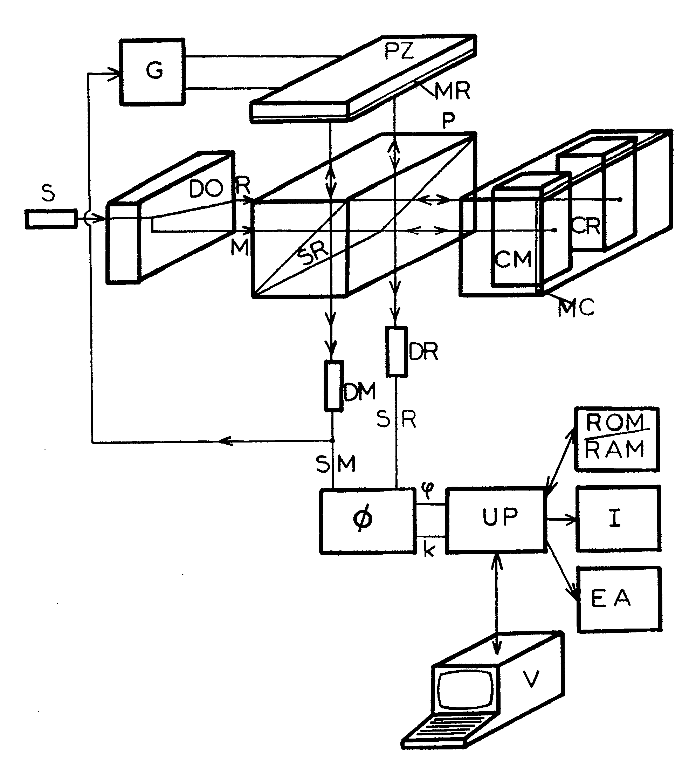

Pour mieux faire comprendre les caractéristiques techniques et les avantages de la présente invention, on va en décrire un exemple de réalisation étant bien entendu que celui-ci n'est pas limitatif quant à son mode de mise en oeuvre et aux applications qu'on peut en faire. On se référera à la figure unique qui représente schématiquement un dispositif détecteur chromatographique conforme à l'invention.

Une source S de lumière monochromatique, de préférence laser, émet un rayon qui par passage dans le dispositif diviseur optique DO se dédouble à la sortie en deux rayons parallèles M et R, qui passent par le double prisme P à surface plane semi-réfléchissante SR entre prismes à 45° par rapport aux rayons. Une partie de ceux-ci est donc réfléchie vers le haut pour être réfléchie selon le même chemin optique par un miroir MR porté par une céramique piézo-électrique PZ et orthogonal aux deux rayons. Ceux-ci sont donc réfléchis et reviennent vers le double prisme et, au moins pour une partie de la lumière, le traversent y compris la surface semi-réfléchissante SR pour atteindre chacune une photodiode DM, DR

La partie de chacun des rayons directs M et R en provenance du diviseur DO qui traverse la surface semi-réfléchissante SR atteint et traverse des deux cuves, l'une CR contenant le liquide de référence, l'autre CM la phase à mesurer. La partie arrière de ces cuves présente un miroir MC orthogonal aux rayons qui donc les réfléchit selon le même chemin pour revenir vers le double prisme P où au moins une partie de la lumière de chaque rayon est réfléchie par la surface semi-réfléchissante SR selon le même chemin que les rayons réfléchis par le miroir MR.

La superposition selon chacun de ces chemins optiques de lumière ayant traversé une cuve et la phase liquide correspondante, et de lumière réfléchie par le miroir mû par la céramique piézoélectrique PZ, dans les conditions ci-après décrites, provoque des interférences comme il a été dit plus haut traduites par les photodiodes DM et DR en signaux électriques SM et SR amenés au phasemètre Φ. Les signaux de mesure SM sont également envoyés en vue de l'asservissement de linéarité au générateur G d'excitation en dents de scies de la céramique piézoélectrique.

A la sortie du phasemètre on recueille des signaux φ d'indication de phase et k du nombre de périodes d'interférence $2 k \pi$. Ces signaux sont traités par une unité centrale telle qu'une unité centrale de calcul UP en relations avec un ensemble de mémoire ROM/RAM, un enregistreur analogique EA et un terminal vidéo V, ainsi que tout autre dispositif adéquat de traitement d'information tel qu'une imprimante I.

Pour un meilleur fonctionnement des interféromètres, on peut être amené à utiliser une lumière polarisée, laser ou non.

Bien que le dispositif susdécrit selon l'invention ait été ici appliqué à la chromatographie en phase liquide, il est clair qu'un tel réfractomètre différentiel peut être employé à d'autres fins, en restant toujours dans le cadre de l'invention, comme la mesure d'indices de réfraction, par exemple dans un contrôle en ligne de chaîne de production de produits chimiques.

**Revendications**

1. Détecteur réfractométrique pour chromatographie en phase liquide à haute performance comprenant une source (S) de lumière monochromatique émettant un faisceau qui, après dédoublement, est divisé en deux faisceaux (R,M) parallèles qui pénètrent dans un système optique où chacun se réfléchit au moins partiellement sur deux miroirs (MR,MC) qui lui sont perpendiculaires, l'un de ces miroirs (MR) étant mû perpendiculairement à son plan par un dispositif piézo-électrique, qui, à l'intérieur de ce système optique, passent respectivement à travers deux cuves (CM,CR), l'une contenant un liquide de référence et l'autre le liquide de mesure, et qui, à l'issue de ces cuves, passent dans un ensemble de détection (DM,DR), ledit dispositif piézo-électrique étant excité par les signaux de mesure provenant de cet ensemble de détection, caractérisé par le fait que chacun desdits faisceaux (R, M) est divisé dans un système (P) à surface semi-réfléchissante à 45° (SR), une partie passant dans l'une des cuves (CR, CM) et étant réfléchie par l'arrière de la cuve formant miroir fixe (MC) pour revenir vers la surface semi-réfléchissante (SR) selon un chemin inverse, l'autre partie du faisceau venant se réfléchir sur ledit miroir (MR) mû par un dispositif piézo-électrique (PZ), les deux parties de chaque faisceau en provenance des cuves (CR, CM) et en provenance du miroir (MR) mû par un dispositif piézo-électrique étant réunies dans le système semi-réfléchissant (P, SR) pour atteindre ledit ensemble de détection qui, pour chaque faisceau, est composé d'une photodiode (DR, DM) envoyant les signaux émis à un phasemètre (Φ) mesurant le déphasage $\phi$ et le nombre de cycles k de déphasage entre les faisceaux.

2.  Détecteur selon la revendication 1, caractérisé par le fait que les signaux de phase $\phi$ et de nombre de cycles k du phasemètre (Φ) sont traités dans une unité centrale de calcul (UP) connectée à un terminal (V) pour enregistrement et/ou affichage et/ou impression.

3.  Détecteur selon l'une quelconque des revendications 1 et 2, caractérisé par le fait que ladite source du lumière monochromatique est une source laser (S).

**Claims**

1.  A refractometric detector for high performance liquid phase chromatography comprising a monochromatic light source (S) emitting a beam which, after splitting, is divided into two parallel beams (M,R) which go through an optical system where each of beam is at least partially reflected on two perpendicular mirrors (MR,MC), the one (MR) of these mirrors being moved perpendicularly to its plane by a piezoelectric device and which, inside this optical system, go respectively through two cuvettes (CM;CR), the one containing a reference liquid and the other containing the measurement liquid and which, after these cuvettes, go through to a detection unit (DM,DR), the said piezoelectric device being excited by the measurement signals coming from this detection unit, CHARACTERIZED in that each of the said beams (R,M) is divided in a system (P) with a semi-reflecting surface (SR) at 45°, a part going into one of the cuvettes (CR, CM) and being reflected by the rear of the cuvette forming a fixed mirror (MC) to come back to the semireflecting surface (SR) along a reverse path, the other part of the beam coming to be reflected on the said mirror (MR) moved by a piezoelectric device (PZ), the two parts of each beam coming from the cuvettes (CR,CM) and coming from the mirror (MR) moved by a piezoelectric device, are joined in the semireflecting system (P,SR) to reach the said detection unit which, for each beam, consists of a photodiode (DR,DM) sending the emitted signals to a phasemeter (Φ) measuring the phase shift $\phi$ and the number of cycles k of phase shift between the beams.

2.  A detector according the claim 1 wherein the phase signals $\phi$ and the number of cycles k of the phasemeter (Φ) are processed in a central processing unit (UP) connected to a terminal (V) for registration and/or displaying and/or printing.

3.  A detector according anyone of the claims 1 and 2, wherein the said monochromatic light source(s) is a laser source.

**Patentansprüche**

1.  Refraktometer für Flüssigkeits-Chromatographie hoher Leistung umfassend eine Quelle (S) für monochromatisches Licht, die ein Strahlenbündel aussendet, das nach einer Doppelung aufgeteilt ist in zwei parallele Strahlenbündel (M, R), die in ein optisches System eintreten, wo jedes Strahlenbündel zumindest teilweise an zwei Spiegeln (MR, MG) reflektiert wird, die senkrecht zueinander stehen, von denen einer (MR) senkrecht zu seiner Ebene mit einer piezo-elektrischen Vorrichtung versehen ist, und die im Inneren des optischen Systems durch jeweils einen Behälter (CM, CR) hindurchtreten, von denen einer eine Bezugsflüssigkeit und der andere die Zu messende Flüssigkeit enthält, und die am Ausgang der Behälter in eine Meßeinrichtung (DM, DR) eintreten, wobei die piezo-elektrische Vorrichtung durch Meßsignale von der Meßeinrichtung erregt wird, **dadurch gekennzeichnet,** daß jedes Strahlenbündel (R, M) in einem System (P) an einer unter 45° geneigten halbreflektierenden Fläche (SR) unterteilt ist, wobei ein Teil in einen der Behälter (CR, CM) eintritt und an der Rückseite des Behälters, die einen festen Spiegel (MG) bildet, reflektiert wird, um wieder auf die halbreflektierende Fläche (SR) auf dem umgekehrten Weg zurückzukehren, während der andere Teil des Strahlenbündels an dem Spiegel (MR), der mit der Piezo-elektrischen Vorrichtung (PZ) versehen ist, reflektiert wird, worauf die beiden Teile eines jeden Strahlenbündels, die von den Behältern (CR, CM) und von den mit der piezo-elektrischen Vorrichtung versehenen Spiegel (MR) kommen, in dem halbreflektierenden System (P, SR) wiedervereinigt werden, um in die Meßvorrichtung zu gelangen, die für jedes Strahlenbündel eine Photodiode (DR, DM) umfaßt, die Signale zu einem Phasenmesser (Φ) aussendet, der die Phasenverschiebung φ und die Anzahl der Zyklen k der Phasenverschiebung zwischen den Strahlenbündeln mißt.

2. Refraktometer nach Anspruch 1, **dadurch gekennzeichnet,** daß die Signale der Phase φ und die Anzahl der Zyklen k des Phasenmessers (Φ) in einem zentralen Rechner (UP) verarbeitet werden, der mit einem Terminal (V) für die Aufzeichnung und/oder Anzeige und/oder Druck verbunden ist.

3. Refraktometer nach Anspruch 1 oder 2, **dadurch gekennzeichnet,** daß die Quelle für monogromatisches Licht eine Laser-Quelle (S) ist.